# EUROPEAN PATENT APPLICATION

(11) **EP 0 837 106 A1**
(43) Date of publication of application: **22.04.1998**
(21) Application number: 97402034.9
(22) Date of filing: 01.09.1997
(51) Int. Cl.: C08L 95/00, C08F 210/02

(54) **An asphalt modifier and an asphalt composition containing said modifier**

(30) Priority: 15.10.1996 JP 272051/96
(71) Applicant: ELF ATOCHEM S.A., 92800 Puteaux, Hauts-de-Seine (FR)
(72) Inventor: Yamaguchi, Noboru, Ichihara city, Chiba pref. (JP); Fujita, Harunori, Ichihara city, Chiba pref. (JP)
(74) Representative: Neel, Henry

(57) **Abstract**

The objectives of the present invention lie in offering an asphalt modifier with outstanding solubility in the asphalt, and an asphalt composition containing said modifier and asphalt which has outstanding adhesion to aggregate.

An asphalt modifier which is characterized in that it contains an ethylene copolymer comprising repeating units derived from ethylene and repeating units derived from maleic anhydride, where said copolymer has a melt flow rate which exceeds 50 g/10 minutes but is no more than 1000 g/10 minutes.

## Description

### [Detailed Description of the Invention]

### [Technical Field of the Invention]

The present invention relates to an asphalt modifier and to an asphalt composition containing said modifier.

### [Problem to be Resolved by the Invention]

As is well-known, resin- or rubber-added asphalt compositions are widely employed for paving, etc. For example, in Japanese Examined Patent Publication No. 2-21421 there is disclosed a composition containing asphalt and an ethylene/alkyl acrylate ester/maleic anhydride terpolymer of melt flow rate from 5 to 50 g/10 minutes.

However, the adhesion of this composition to the aggregate is not altogether sufficient and, furthermore, there has been the problem that the aforesaid terpolymer has low affinity for asphalt and requires considerable time for dissolution.

The objectives of the present invention lie in offering an asphalt modifier with outstanding solubility in the asphalt, and an asphalt composition containing said modifier and asphalt which has outstanding adhesion to aggregate.

### [Means for Resolving the Problem]

The present inventors have carried out considerable study into modifiers for adding to asphalt, as a result of which they have discovered that the objectives of the present invention may be attained by an asphalt modifier containing specified ethylene copolymer and by a composition containing said modifier and asphalt. The present invention has been perfected based on this discovery.

Specifically, the present invention is an asphalt modifier which is characterized in that it contains an ethylene copolymer comprising repeating units derived from ethylene and repeating units derived from maleic anhydride, where said copolymer has a melt flow rate which exceeds 50 g/10 minutes but is no more than 1000 g/10 minutes.

Further, the present invention is an asphalt composition which is characterized in that it contains 100 parts by weight of asphalt and 0.1 to 10 parts by weight of the aforesaid asphalt modifier.

Below, the present invention is explained in detail.

### [Form of Practising the Invention]

The asphalt modifier of the present invention contains the following ethylene copolymer.

This ethylene copolymer is an ethylene copolymer comprising repeating units derived from ethylene (hereinafter referred to as 'ethylene units') and repeating units derived from maleic anhydride (hereinafter referred to as 'maleic anhydride units'), and its melt flow rate exceeds 50 g/10 minutes but is no more than 1000 g/10 minutes.

The content of the aforesaid ethylene units is from 90 to 99.9 wt%, preferably from 95 to 99 wt%, and the content of the maleic anhydride units is from 10 to 0.1 wt%, preferably 5 to 1 wt%.

The aforesaid ethylene copolymer may also be an ethylene terpolymer comprising ethylene units, maleic anhydride units and repeating units derived from ethylenically unsaturated ester (hereinafter referred to as 'ethylenically unsaturated ester units').

As examples of the ethylenically unsaturated ester, there are vinyl acetate and the alkyl esters of α,β-unsaturated carboxylic acids. The α,β-unsaturated carboxylic acid alkyl esters are the alkyl esters of unsaturated carboxylic acids with from 3 to 8 carbons like acrylic acid and methacrylic acid, specific examples being methyl acrylate, ethyl acrylate, n-propyl acrylate, isopropyl acrylate, n-butyl acrylate, t-butyl acrylate, isobutyl acrylate, methyl methacrylate, ethyl methacrylate, n-propyl methacrylate, isopropyl methacrylate, n-butyl methacrylate, t-butyl methacrylate and isobutyl methacrylate, etc.

Of these, vinyl acetate, methyl acrylate, ethyl acrylate, n-butyl acrylate and methyl methacrylate are preferred.

In the case where the ethylene copolymer is an ethylene terpolymer, the content of ethylene units is from 40 to 99.9 wt%, preferably 55 to 96 wt%, the content of maleic anhydride units is from 10 to 0.1 wt%, preferably 5 to 1 wt%, and the content of ethylenically unsaturated ester units is from 0 to 50 wt%, preferably 3 to 40 wt%.

The melt flow rate (MFR) of the ethylene copolymer is measured at 190°C under a 2.16 kg load and needs to exceed 50 g/10 minutes but be no more than 1000 g/10 minutes, preferably it is from 80 to 500 g/10 minutes and more preferably from 100 to 400 g/10 minutes. If the MFR here is 50 g/10 minutes or less, then the solubility may be impaired while, on the other hand, if it is greater than 1000 g/10 minutes the adhesive strength in terms of the aggregate may be adversely affected.

The asphalt composition of the present invention contains the aforesaid asphalt modifier and asphalt.

The asphalt is not particularly restricted, and examples are straight asphalt for paving, lake asphalt or other such natural asphalt, semi-blown asphalt, straight asphalt modified using some blown asphalt, tar-modified straight asphalt, or the like, with one type of these or a mixture of two or more types being used.

The asphalt composition of the present invention contains 100 parts by weight of asphalt and from 0.1 to 10 parts by weight, preferably 0.5 to 5 parts by weight, of the aforesaid asphalt modifier.

The asphalt composition of the present invention can also include various other known modifiers within a range such that the objectives are not impeded, and rubbers, thermoplastic elastomers and other ethylene copolymers can be cited as examples of such modifiers.

Amongst these other ethylene copolymers, ethylene/ ethylenically unsaturated ester copolymers have outstanding compatibility with the asphalt modifier of the present invention, and so are especially preferred.

The method of obtaining the asphalt composition of the present invention is not particularly restricted and it will be satisfactory if the asphalt modifier of the present invention is added to the asphalt while heating and then melt kneading performed. The temperature of melting said modifier and asphalt is, for example, from 160 to 200°C.

### [Examples]

Below, the present invention is explained based on examples but the invention is not to be restricted thereto.

The methods of measuring the properties in the examples and comparative examples were as follows.

### (1) Asphalt penetration

This was measured in accordance with the method specified in JIS K2207.

### (2) Melt flow rate (MFR)

This was measured in accordance with the method specified in JIS K6760.

### (3) Content of the ethylene units, maleic anhydride units and ethyl acrylate units

A pressed sheet was produced, then the absorbance for characteristic absorption peaks in the infrared absorption spectrum determined and, after correcting for thickness, the content of the particular units was determined by the calibration curve method. The characteristic absorption peaks employed were as follows:- maleic anhydride = 1790 cm⁻¹ and ethyl acrylate = 3450 cm⁻¹. The ethylene unit content was determined by subtracting the content of the above co-monomer structural components from 100 wt%.

### (4) Adhesion to the aggregate

This was determined in accordance with the method specified in the static stripping test of the Asphalt Paving Stipulations (Asphalt *Hoso Yoko).*

The stripped state was assessed by eye based on four levels, I (0%), II (5 to 12%), III (12 to 28%) and IV (28%+), according to the pattern classification table of the stripped states described in the Joint Test Report No. 6 relating to the stripping of paving asphalt, published by the Japan Petroleum Institute. 0 % means the aggregate remains completely covered by the asphalt.

### (5) Solubility in the asphalt

When adding a modifier to asphalt, if the modifier has poor solubility then undissolved material will float to the asphalt surface. This was assessed by eye based on the following classifications. The mixing temperature in such circumstances was 180°C and the mixing time was 30 minutes.
- O: no floating modifier material at the asphalt surface
- X: undissolved floating modifier at the asphalt surface
- -: only asphalt employed, so evaluation of solubility impossible

### Example 1

As the modifier, there was used ethylene copolymer (A-1) containing 91 wt% of ethylene units, 3 wt% of maleic anhydride units and 6 wt% of ethyl acrylate units, and having a MFR of 200 g/10 minutes. 100 parts by weight of asphalt (penetration = 70) and 2 parts by weight of the aforesaid modifier were melt kneaded for 30 minutes at 180°C. Using the asphalt composition thus obtained, a stripping test was carried out in terms of aggregate (No.6 crushed stone). The results are shown in Table 1.

### Example 2

The same method as in Example 1 was followed excepting that there was employed 0.5 part by weight of ethylene copolymer (A-1 ) identical to the modifier used in Example 1. The results are shown in Table 1.

### Comparative Example 1

The same method as in Example 1 was followed excepting that no modifier was employed and there was used only asphalt identical to that in Example 1.

### Comparative Example 2

The same method as in Example 1 was followed excepting that, as the modifier, there was used ethylene copolymer (A-2) containing 68 wt% of ethylene units, 2 wt% of maleic anhydride units and 30 wt% of ethyl acrylate units, and having a MFR of 7 g/10 minutes. The results are shown in Table 1.

**[Table 1]**

| | Example Number | | Comparative Example Number | |
|---|---|---|---|---|
| | 1 | 2 | 1 | 2 |
| Asphalt modifier | A-1 | A-1 | - | A-2 |
| amount blended (parts by weight) | 2 | 0.5 | 0 | 2 |
| Evaluations | | | | |
| stripping property | I | I | IV | IV |
| solubility | O | O | - | X |

| | | | | |
|---|---|---|---|---|
| (Notes) A-1: ethylene/maleic anhydride/ethyl acrylate copolymer (content of ethylene units = 91 wt%, maleic anhydride units = 3 wt% and ethyl acrylate units = 6 wt%; MFR = 200 g/10 minutes) | | | | |
| A-2: ethylene/maleic anhydride/ethyl acrylate copolymer (content of ethylene units = 68 wt%, maleic anhydride units = 2 wt% and ethyl acrylate units = 30 wt%; MFR = 7 g/10 minutes) | | | | |

### [Effects of the Invention]

Thus, in accordance with the present invention as described above, it is possible to offer an asphalt modifier with outstanding solubility in asphalt.

Further, it is possible to offer an asphalt composition with high bonding strength to the aggregate, and which is also outstanding in terms of solubility.

## Claims

1. An asphalt modifier which is characterized in that it contains an ethylene copolymer comprising repeating units derived from ethylene and repeating units derived from maleic anhydride, where said copolymer has a melt flow rate which exceeds 50 g/10 minutes but is no more than 1000 g/10 minutes.

2. An asphalt modifier according to Claim 1 where the ethylene copolymer is an ethylene terpolymer comprising repeating units derived from ethylene, repeating units derived from maleic anhydride and repeating units derived from ethylenically unsaturated ester.

3. An asphalt composition which is characterized in that it contains 100 parts by weight of asphalt and from 0.1 to 10 parts by weight of asphalt modifier according to Claim 1 or Claim 2.
